# EUROPÄISCHE PATENTSCHRIFT

(11) **EP 1 258 047 B1**
(45) Veröffentlichungstag und Bekanntmachung des Hinweises auf die Patenterteilung: **08.10.2003**
(21) Anmeldenummer: 01909552.0
(22) Anmeldetag: 31.01.2001
(51) Int. Cl.: H01M 8/02, H01M 8/24, H01M 8/04

(54) **BRENNSTOFFZELLENBLOCK MIT EINEM AN DIE BETRIEBSGASZULEITUNG ANGESCHLOSSENEN KONDENSWASSERABSCHEIDER**
FUEL CELL BLOCK WITH CONDENSED WATER SEPARATOR IN REACTANT SUPPLY LINE
Assemblage de piles à combustible ayant un moyen de récupération de l'eau de condensation branché sur le conduit d'alimentation en gaz

(30) Priorität: 14.02.2000 DE 10006472
(43) Veröffentlichungstag der Anmeldung: 20.11.2002
(73) Patentinhaber: SIEMENS AKTIENGESELLSCHAFT, 80333 München (DE)
(72) Erfinder: COERLIN, Detlev, 91056 Erlangen (DE); MATTEJAT, Arno, 91088 Bubenreuth (DE)
(86) Internationale Anmeldenummer: DE0100378
(87) Internationale Veröffentlichungsnummer: WO01059863

(56) Entgegenhaltungen:
- DE-A- 19 809 575
- US-A- 3 392 058
- US-A- 4 002 493
- US-A- 5 064 732
- PATENT ABSTRACTS OF JAPAN vol. 1996, no. 11, 29. November 1996 (1996-11-29) -& JP 08 195212 A (TOYOTA MOTOR CORP), 30. Juli 1996 (1996-07-30)
- PATENT ABSTRACTS OF JAPAN vol. 012, no. 099 (E-594), 31. März 1988 (1988-03-31) -& JP 62 229768 A (SHIN KOBE ELECTRIC MACH CO LTD), 8. Oktober 1987 (1987-10-08)
- PATENT ABSTRACTS OF JAPAN vol. 1999, no. 02, 26. Februar 1999 (1999-02-26) -& JP 10 312821 A (SANYO ELECTRIC CO LTD), 24. November 1998 (1998-11-24)
- PATENT ABSTRACTS OF JAPAN vol. 012, no. 476 (E-693), 13. Dezember 1988 (1988-12-13) -& JP 63 195971 A (MITSUBISHI ELECTRIC CORP), 15. August 1988 (1988-08-15)
- PATENT ABSTRACTS OF JAPAN vol. 007, no. 076 (E-167), 30. März 1983 (1983-03-30) -& JP 58 005979 A (HITACHI SEISAKUSHO KK), 13. Januar 1983 (1983-01-13)
- PATENT ABSTRACTS OF JAPAN vol. 018, no. 308 (E-1560), 13. Juni 1994 (1994-06-13) -& JP 06 068886 A (FUJI ELECTRIC CO LTD), 11. März 1994 (1994-03-11)
- PATENT ABSTRACTS OF JAPAN vol. 017, no. 566 (E-1446), 13. Oktober 1993 (1993-10-13) -& JP 05 166528 A (MITSUBISHI ELECTRIC CORP), 2. Juli 1993 (1993-07-02)
- PATENT ABSTRACTS OF JAPAN vol. 1998, no. 11, 30. September 1998 (1998-09-30) -& JP 10 172593 A (HONDA MOTOR CO LTD), 26. Juni 1998 (1998-06-26)

## Beschreibung

Die Erfindung bezieht sich auf einen Brennstoffzellenblock, der eine Anzahl von Brennstoffzellen in einem Brennstoffzellenstapel sowie eine Betriebsgaszuleitung umfasst.

Es ist bekannt, dass bei der Elektrolyse von Wasser die Wassermoleküle durch elektrischen Strom in Wasserstoff (H₂) und Sauerstoff (O₂) zerlegt werden. In einer Brennstoffzelle läuft u.a. dieser Vorgang in umgekehrter Richtung ab. Durch eine elektrochemische Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid (CO₂). Auch mit einem technischen Brenngas, beispielsweise Erdgas oder Kohlegas und mit Luft anstelle von reinem Sauerstoff, wobei die Luft zusätzlich mit Sauerstoff angereichert sein kann, erzeugt eine Brennstoffzelle deutlich weniger Schadstoffe und weniger Kohlendioxid als andere Energieerzeuger, die mit fossilen Energieträgern arbeiten.

Die technische Umsetzung des Prinzips der Brennstoffzelle hat zu unterschiedlichen Lösungen, und zwar mit verschiedenartigen Elektrolyten und mit Betriebstemperaturen zwischen 80°C und 1000°C, geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal 1,1 Volt. Daher wird eine Vielzahl von Brennstoffzellen aufeinander gestapelt und zu einem Brennstoffzellenblock zusammengefasst. In der Fachliteratur wird ein solcher Block auch "Stack" genannt. Durch das In-Reihe-Schalten der Brennstoffzellen des Brennstoffzellenblocks kann die Betriebsspannung einer Brennstoffzellenanlage einige 100 Volt betragen.

Bei einem Brennstoffzellenblock sind-in abwechselnder Reihenfolge verschiedene Bauelemente aufeinandergestapelt. Solche Bauelemente sind beispielsweise eine Elektrolyt-Elektroden-Einheit und eine bipolare Platte. Je nach Ausführungsform des Brennstoffzellenblocks befinden sich zwischen einer Elektrolyt-Elektroden-Einheit und einer bipolaren Platte weitere Bauelemente, wie beispielsweise Druckkissen, elektrisch leitende Schichten oder Dichtungen. In Abhängigkeit von der Art der Brennstoffzellen ist die bipolare Platte beispielsweise als eine Verbundleiterplatte oder als ein Temperierelement ausgestaltet, das aus zwei aufeinandergestapelten Platten mit einem dazwischenliegenden Kühl- oder Heizwasserraum besteht.

Die Brennstoffzellen eines Brennstoffzellenblocks werden während ihres Betriebs mit Betriebsgasen - also wasserstoffhaltigem Gas und sauerstoffhaltigem Gas - versorgt. Manche Ausführungsformen von Niedertemperatur-Brennstoffzellen, insbesondere Brennstoffzellen mit Polymer-Elektrolyt-Membranen (PEM-Brennstoffzellen), benötigen zum Betrieb befeuchtete Betriebsgase. Diese Betriebsgase werden in einer geeigneten Einrichtung, wie beispielsweise einem Flüssigkeitsringverdichter oder anderen Befeuchtern auf die Temperatur des Brennstoffzellenblocks aufgeheizt und mit Wasserdampf gesättigt.

Werden die Betriebsgase durch lange Betriebsgaszuleitungen vom Befeuchter zum Brennstoffzellenblock geleitet, so kann auf diesem Weg die Temperatur eines befeuchteten Betriebsgases durch Wärmeverlust an die Umgebung sinken. Dies führt zur Kondensation von Wasser. Bei großen Massenströmen, langen Leitungen und großen Oberflächen der Leitungen, wie dies beispielsweise in Brennstoffzellenblöcken der Fall ist, die mit Luft als sauerstoffhaltigem Betriebsgas betrieben werden, können so erhebliche Mengen an flüssigem Wasser anfallen. Dieses Wasser wird mit dem Betriebsgas zum Brennstoffzellenblock transportiert und läuft bevorzugt in die in Strömungsrichtung des Betriebsgases gesehen zuerst angeordneten Zellen. Bei ausreichend großer Menge kann das Wasser den Gasaustausch und somit die elektrochemische Verbindung von Wasserstoff und Sauerstoff in diesen Zellen behindern und damit die Leistung dieser Zellen beeinträchtigen.

In Brennstoffzellenanlagen, die in Fahrzeuge integriert werden sollen, ist es nicht immer möglich, den Befeuchter und den Brennstoffzellenblock räumlich so nahe beieinander einzubauen, dass keine oder nur vernachlassigbare Kondensation auftritt. Meistens sind die Einbauräume vorgegeben. Die Komponenten der Brennstcffzellenanlage, also auch Befeuchter und ein oder mehrere Brennstoffzellenblöcke, müssen im vorhandenen Einbauraum so verteilt werden, dass Randbedingungen, wie Gewichtsverteilung im Fahrzeug, Ein- und Ausbauräume und Zugänglichkeit für die Wartung beachtet werden müssen. Damit kommt es gegebenenfalls zu einer Interessenkollision, die das Funktionieren der Brennstoffzellenanlage infrage stellen kann.

Aufgabe der Erfindung ist es, einen Brennstoffzellenblock anzugeben, bei dem die Funktion der Brennstoffzellen nicht durch Kondenswasser beeinträchtigt wird.

Diese Aufgabe wird durch einen Brennstoffzellenblock gelöst, der eine Anzahl von Brennstoffzellen in einem Brennstoffzellenstapel sowie eine Betriebsgaszuleitung umfasst, und der erfindungsgemäß einen von der Betriebsgaszuleitung abzweigenden Kondenswasserabscheider aufweist.

Die Erfindung geht von der Überlegung aus, dass bei einer langen Betriebsgaszuleitung vom Befeuchter zum Brennstoffzellenblock die Kondensation von Wasser aus dem Betriebsgas nur mit großem Aufwand, beispielsweise durch die Wärmeisolierung und Heizung der betroffenen Leitungen, verhindert werden kann. Um den Wirkungsgrad des Brennstoffzellenblocks nicht zu schmälern, kommt eine solche Lösung nicht in Betracht. Eine günstigere Lösung stellt das Abführen des Kondenswassers dar. Dies geschieht besonders einfach durch eine Kondenswasserableitung, die zwischen dem Befeuchter und dem Brennstoffzelienblock von der Betriebsgaszuleitung abzweigt.

Eine solche Lösung bringt jedoch den Nachteil mit sich, dass die-Brennstoffzellenanlage, deren Bestandteil der Brennstoffzellenblock ist, eine weitere Leitung aufweist. Da eine Brennstoffzellenanlage in einem Fahrzeug auf engstem Raum untergebracht werden muss und eine solche Anlage eine Vielzahl von Rohren, Schläuchen, Verbindungselementen und Ventilen umfasst, stellt jede zusätzlich Leitung einen nicht unerheblichen Nachteil dar.

Daher geht die Erfindung von der weiteren Überlegung aus, dass die Integration der Kondenswasserableitung in den Brennstoffzellenblock den Nachteil einer zusätzlichen Leitung umgeht. Diese Kondenswasserableitung ist hierbei beispielsweise Bestandteil eines Kondenswasserabscheiders, der neben der Kondenswasserableitung noch weitere Elemente umfasst. Der Kondenswasserabscheider kann aber auch alleine durch die Kondenswasserableitung gebildet sein. Ein auf diese Weise als Bestandteil des Brennstoffzellenblocks ausgestalteter Kondenswasserabscheider bringt den weiteren Vorteil mit sich, dass er an einer Stelle der Betriebsgaszuleitung angeschlossen ist, an der die Betriebsgasleitung die Temperatur des Brennstoffzellenblocks hat. "Angeschlossen" bedeutet hierbei, dass der Kondenswasserabscheider mit der Betriebsgaszuleitung in der Weise verbunden ist, dass das Kondenswasser von der Betriebsgaszuleitung in den Kondenswasserabscheider fließen kann.

Bei der weiteren Führung der Brenngaszuleitung zu den einzelnen Brennstoffzellen bleibt die Betriebsgaszuleitung auf der konstanten Temperatur des Brennstoffzellenblocks, weshalb keine weitere Kondensation von Wasser aus dem befeuchteten Betriebsgas erfolgt. Hierdurch ist gewährleistet, dass der Kondenswasserabscheider die gesamte Menge des Kondenswassers aus dem Betriebsgas abscheidet und im wesentlichen kein Kondenswasser in die Brennstoffzellen gelangen kann. Hierdurch wird eine Beeinträchtigung der Funktion der Brennstoffzellen durch Kondenswasser wirksam vermieden.

Die Abscheidung des Kondenswassers aus der Betriebsgaszuleitung geschieht zum Beispiel in der Weise, dass die Kondenswasserableitung wie ein Straßengully das Kondenswasser aus der Betriebsgaszuleitung aufnimmt. Das Kondenswasser wird durch die Kondenswasserableitung hindurchgeleitet, eventuell in einem Kondenswassersammelraum des Kondenswasserabscheiders zwischengelagert und anschließend aus dem Kondenswasserabscheider fortgeleitet.

In vorteilhafter Ausgestaltung der Erfindung ist die Kondenswasserableitung in einem plattenförmigen Bauelement angeordnet und das Bauelement in den Brennstoffzellenstapel integriert. Ein Brennstoffzellenblock weist eine Vielzahl von plattenförmigen Bauelementen auf. Solche plattenförmigen Bauelemente beherbergen Betriebsgasräume, in denen die Betriebsgase entlang der Elektrolyt-Elektroden-Einheit strömen können, einen oder mehrere Kühlwasserräume und eine Vielzahl von Kanälen zur Zu- und Ableitung von Betriebsgasen und Kühlwasser. Ohne großen Aufwand kann ein solcher Kanal und/oder Raum innerhalb eines plattenförmigen Bauelements derart umgestaltet werden, dass Kanal und/oder Raum als ein Kondenswasserabscheider fungieren. Bevorzugt werden solche Kanäle und oder Räume verwendet, die im normalen Betrieb des Brennstoffzelienblocks ansonsten ohne Funktion sind. Hierdurch wird für die Ausgestaltung des Kondenswasserabscheiders kein zusätzliches plattenförmiges oder sonstiges Bauelement innerhalb des Brennstoffzellenblocks benötigt. Es wird daher weder die Komplexität der Brennstoffzellenanlage erhöht noch das Volumen des Brennstoffzellenblocks vergrößert.

Mit Vorteil ist das Bauelement eine Anschlussplatte des Brennstoffzellenblocks. Die Anschlussplatte begrenzt den Brennstoffzellenstapel des Brennstoffzellenblocks und ist mit Anschlüssen für die Versorgung des Brennstoffzellenstapels mit Betriebsgas und Kühl- oder Heizwasser versehen. Die Betriebsgaszuleitung läuft vom Befeuchter zum Brennstoffzellenblock, durch die Anschlussplatte hindurch zu den einzelnen Brennstoffzellen. Die Integration des Kondenswasserabscheiders in die Anschlussplatte ist ohne wesentliche Vergrößerungdes Volumens des Brennstoffzellenblocks durchführbar. Mit ähnlichem Vorteil lässt sich der Kondenswasserabscheider auch in eine Trennplatte integrieren, die zwei Bereiche des Brennstoffzellenblocks voneinander trennt.

In einer weiteren Ausgestaltung der Erfindung verläuft der Kondenswasserabscheider entlang einer Thermokarte. Eine Thermokarte ist eine Heiz- oder Kühlkarte, und dient der Temperaturregulierung innerhalb des Brennstoffzellenblocks. Bei üblichen Brennstoffzellen ist die Thermokarte von denjenigen Gasräumen benachbart, durch die die Betriebsgase während des Betriebs der Brennstoffzellen hindurch und an der Elektrolyt-Elektroden-Einheit entlang strömen. Die in Stapelrichtung des Brennstoffzellenstapels gesehen erste Thermokarte ist von einem Gasraum benachbart, an den keine Elektrolyt-Elektroden-Einheit grenzt. Durch diesen Gasraum strömt sinnvollerweise kein Betriebsgas, da es durch die fehlende Elektrolyt-Elektroden-Einheit keine elektrochemische Reaktion eingehen kann. Der Gasraum ist daher ohne Funktion. Dieser Gasraum mit seinen Anschlüssen zur Betriebsgaszuleitung kann somit ohne Leistungsverlust des Brennstoffzellenblocks als Kondenswasserabscheider verwendet werden. Bei einer solchen Ausgestaltung durchströmt das Kondenswasser einen analogen Weg wie das Betriebsgas in der benachbarten Brennstoffzelle.

Zweckmäßigerweise ist der Kondenswasserabscheider in Strömungsrichtung des Betriebsgases gesehen vor der ersten Brennstoffzelle an die Betriebsgaszuleitung angeschlossen. Bei einem derart angeordneten Kondenswasserabscheider ist gewährleistet, dass das Kondenswasser, das in der Betriebsgaszuleitung zwischen dem Befeuchter und dem Brennstoffzellenblock auskondensiert ist, nicht in die erste Brennstoffzelle gelangen kann, sondern schon auf dem Weg zur ersten Brennstoffzelle vom Kondenswasserabscheider aufgenommen wird.

In weiterer vorteilhafter Ausgestaltung der Erfindung umfasst der Kondenswasserabscheider eine Gassperre. Ein ohne eine Gassperre ausgestalteter Kondenswasserabscheider weist den Nachteil auf, dass eine gewisse Menge Betriebsgas seinen Weg nicht in die Brennstoffzellen, sondern via Kondenswasserabscheider durch den Brennstoffzellenblock hindurch nimmt. Eine Gassperre im Kondenswasserabscheider verhindert oder reduziert einen solchen durch den Kondenswasserabscheider strömenden parasitären Gasstrom. Die Gassperre kann eine aktive oder eine passive Gassperre sein.

Als aktive Gassperre eignet sich ein im Kondenswasserabscheider angeordnetes Ventil, das nur im geöffneten Zustand Kondenswasser durchlässt. Im geschlossenen Zustand staut das Ventil das Kondenswasser oberhalb des Ventils auf. Im Betrieb des Brennstoffzellenblocks wird das Ventil periodisch geöffnet und geschlossen und somit das Kondenswasser portionsweise abgeleitet. Wird immer nur so viel Kondenswasser durch das Ventil gelassen, dass ein Rest von Kondenswasser oberhalb des Ventils verbleibt, wird ein Durchströmen des Kondenswasserabscheiders von einem parasitären Gasstrom wirksam vermieden. Das Abtasten der Kondenswassermenge oberhalb des Ventils kann durch einen Sensor erfolgen.

Als passive Gassperre eignet sich beispielsweise eine Verengung innerhalb des Kondenswasserabscheiders, ein Sieb oder ein Filter. Eine solche Gassperre vermindert den parasitären Gasstrom. Der Gasstrom kann durch die Art des Siebes, Filters oder der Verengung auf eine festgelegte Menge eingestellt werden. Der parasitäre Gasstrom kann auch zum Vorteil dienen, da er das Kondenswasser auf dem ihm vorbestimmten Weg weiterdrückt. Eine gasdichte passive Gassperre ist beispielsweise ein sogenannter "Knick". In einem solchen Knick, wie er in jedem Waschbeckensiphon zu finden ist, steht durch eine S-förmige Anordnung einer Wasserleitung immer eine gewisse Menge Wasser. Dieses Wasser verschließt den Kondenswasserabscheider gasdicht und verhindert somit ein Durchströmen des Kondenswasserabscheiders mit Betriebsgas.

Ein weiterer Vorteil der Erfindung wird erreicht, indem der Kondenswasserabscheider an einem Wassersammelbehälter angeschlossen ist. Der Ausgang des Kondenswasserabscheiders mündet somit in eine Leitung, die zu dem Wassersammelbehälter führt oder direkt in den Sammelbehälter. Ein solcher Wassersammelbehälter ist in einer Brennstoffzellenanlage, die mit befeuchteten Betriebsgasen arbeitet, grundsätzlich vorhanden. Er dient zur Rückführung und Zwischenspeicherung des in den Brennstoffzellen entstehenden Produktwassers. Der Wassersammelbehälter ist in der Regel an den Befeuchter angeschlossen, der Produktwasser als Befeuchtung wieder in die Brennstoffzellen führt. Hierdurch wird auch das Kondenswasser im Wassersammelbehälter gesammelt und den Brennstoffzellen zur Befeuchtung wieder zur Verfügung gestellt.

In bevorzugter Ausführungsform der Erfindung ist der Kondenswasserabscheider an eine Betriebsgasableitung angeschlossen. Der Kondenswasserabscheider verbindet somit eine Betriebsgaszuleitung mit einer Betriebsgasableitung und leitet das Kondenswasser aus der Betriebsgaszuleitung unmittelbar in eine Betriebsgasableitung, durch die das Kondenswasser wiederum aus dem Brennstoffzellenblock herausgeführt wird. Während des Betriebs der Brennstoffzellen wird in den Brennstoffzellen durch die elektrochemische Reaktion von Wasserstoff und Sauerstoff Wasser gebildet. Dieses Wasser wird durch die Betriebsgasableitung zusammen mit dem Betriebsgas, das die Brennstoffzellen ohne Reaktion durchströmt, aus dem Brennstoffzellenblock herausgeführt. In diesen Wasserstrom wird das Kondenswasser aus dem Kondenswasserabscheider hinzugefügt. Bei einer solchen Ausgestaltung der Erfindung sind keine Kanäle oder Leitungen vom Kondenswasserabscheider zu einem Wassersammelbehälter notwendig. Dies vereinfacht den Aufbau und reduziert das Volumen des Brennstoffzellenblocks,

Zweckmäßigerweise ist in der Betriebsgaszuleitung eine Kondenswasserbarriere angeordnet. Diese Barriere sorgt dafür, dass das in der Betriebsgaszuleitung strömende Kondenswasser nicht über die Öffnung der Kondenswasserableitung des Kondenswasserabscheiders vorbei und weiter in die Brennstoffzellen strömt. Die Kondenswasserbarriere ist beispielsweise als eine Schwelle in der Betriebsgaszuleitung ausgebildet, die den Fluss des Kondenswassers hemmt. Innerhalb des Brennstoffzellenblocks wird die Betriebsgaszuleitung durch Öffnungen in den plattenförmigen Elementen des Brennstoffzellenblocks gebildet. Durch eine Verengung der Öffnung in einem Element gegenüber den Öffnungen der benachbarten Elemente entsteht eine Schwelle, die als Kondenswasserbarriere wirkt. Auf diese durch einfache bauliche Maßnahmen zu realisierende Weise wird der Weiterfluss des Kondenswassers durch die Brenngaszuleitung gestoppt.

Alternativ wird die Kondenswasserbarriere durch ein Blech einer Thermokarte gebildet. Eine Thermokarte umfasst in der Regel zwei zusammengefügte Bleche, die zwischen sich einen Heiz- bzw. Kühlwasserraum bilden. Eins oder beide dieser-Bleche können so geführt sein, dass sie in die Betriebsgaszuleitung hineinragen und somit die Kondenswasserbarriere bilden. Sie hindern, ähnlich einer Staumauer, das Kondenswasser am Weiterfluss durch die Betriebsmittelzuleitung.

Zweckmäßigerweise ist die Kondenswasserbarriere zwischen dem Anschluss des Kondenswasserabscheiders an die Betriebsmittelzuleitung und der in Strömungsrichtung des Betriebsgases gesehen folgenden Brennstoffzelle angeordnet. Das Kondenswasser wird mit dem Betriebsgasstrom in den Brennstoffzellenblock hineingedrückt. Bei einer Kondenswasserbarriere unmittelbar hinter der Öffnung des Kondenswasserabscheiders in die Betriebsgaszuleitung - oder zumindest noch in Strömungsrichtung vor der nächstfolgenden Brennstoffzelle - wird das an der Öffnung vorbeigelaufene Kondenswasser aufgestaut. Es flielt dann in die Öffnung zurück. Es wird hierdurch wirksam verhindert, dass das Kondenswasser am Kondenswasserabscheider vorbei und in die nachfolgende Brennstoffzelle fließt.

Ein weiterer Vorteil lässt sich dadurch erreichen, dass die Brennstoffzellen PEM-Brennstoffzellen sind. PEM-Brennstoffzellen werden bei einer niedrigen Betriebstemperatur von etwa 80°C betrieben, weisen ein günstiges Überlastverhalten und eine hohe Lebensdauer auf. Außerdem zeigen sie ein günstiges Verhalten bei schnellen Lastwechseln und sind mit Luft sowie auch mit reinem Sauerstoff betreibbar. Alle diese Eigenschaften machen PEM-Brennstoffzellen besonders geeignet für eine Anwendung im mobilen Bereich, wie beispielsweise für den Antrieb von Fahrzeugen verschiedenster Art.

Ausführungsbeispiele der Erfindung werden anhand von 3 Figuren näher erläutert. Es zeigen:
FIG 1 einen Schnitt durch einen Brennstoffzellenblock in schematischer Darstellung;
FIG 2 einen weiteren Schnitt durch einen Brennstoffzellenblock in schematischer Darstellung;
FIG 3 einen weiteren Schnitt durch einen Brennstoffzellenblock in schematischer Darstellung.

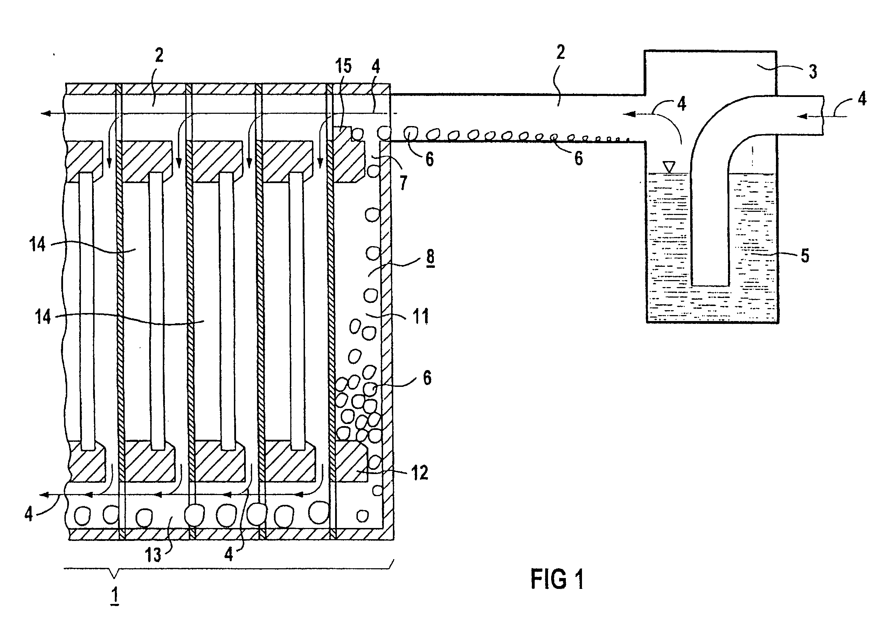

Figur 1 zeigt einen Brennstoffzellenblock 1, eine daran angeschlossene Betriebsgaszuleitung 2 und einen-Befeuchter 3.

Während des Betriebs des Brennstoffzellenblocks strömt Betriebsgas 4, beispielsweise Luft oder wasserstoffhaltiges (H₂) Gas in den Befeuchter 3. Der Befeuchter 3 ist mit Wasser 5 bis zu einem vorgesehenen Niveau gefüllt. Im Befeuchter 3 wird das Betriebsgas 4 erwärmt und bis zur Sättigung mit Wasser befeuchtet. Das Betriebsgas 4 strömt anschließend aus den Befeuchter 3 in die Betriebsgaszuleitung 2. Während des Durchströmens der Betriebsgaszuleitung 2 kühlt das Betriebsgas 4 ab, wodurch Kondenswasser 6 aus dem Betriebsgas 4 auskondensiert.

Durch den Gasstrom des Betriebsgases 4 wird das Kondenswasser 6 in Richtung zum Brennstoffzellenblock 1 gedrückt. Im Brennstoffzellenblock 1 angekommen läuft das Kondenswasser 6 von der Betriebsgaszuleitung 2 durch die Kondenswasserableitung 7 in einen Kondenswasserabscheider 8. Das Kondenswasser 6 sammelt sich in einem Sammelraum 11 des Kondenswasserabscheiders 8. Unterhalb des Sammelraums 11 ist eine Gassperre 12 angeordnet. Die Gassperre 12 des Kondenswasserabscheiders 8 sorgt dafür, dass nur eine geringe Menge Kondenswasser 6 pro Zeit den Sammelraum 11 des Kondenswasserabscheiders 8 verlassen kann. Dies geschieht dadurch, dass die Gassperre 12 den Sammelraum 11 an seinem unteren Ende so verengt, dass nur eine schmale Öffnung zum Verlassen des Sammelraums 11 stehen bleibt. Die Öffnung lässt zusätzlich zum Kondenswasser einen kleinen Betriebsgasstrom durch. Die Öffnung kann jedoch auch so bemessen sein, dass sich am unteren Bereich des Sammelraums 11 das Kondenswasser 6 sammelt, so dass dieser untere Bereich mit Kondenswasser 6 gefüllt ist. Dann strömt kein Betriebsgas 4 durch den Kondenswasserabscheider 8.

Alternativ kann auch die Kondenswasserableitung 7 in ihrem Querschnitt so gewählt sein, dass sie gleichzeitig als Gassperre dient. Unabhängig davon, wo sich die Gassperre 12 im Kondenswasserabscheider befindet ist keine Niveauregelung des Kondenswassers 6 im Sammelraum 11 nötig.

Der Kondenswasserabscheider 8 befindet sich in einer Anschlussplatte des Brennstoffzellenblocks 1, an die unter anderem auch der Teil der Betriebsgaszuleitung 2 an den Brennstoffzellenblock 1 angeschlossen ist, die sich außerhalb des Brennstoffzellenblocks befindet.

Der Kondenswasserabscheider 8 ist in Strömungsrichtung des Betriebsgases 4 gesehen vor der ersten Brennstoffzelle 14 durch die Kondenswasserableitung 7 an die Betriebsgaszuleitung 2 angeschlossen. Zusammen mit der Kondenswasserbarriere 15, die zwischen dem Anschluss des Kondenswasserabscheiders 8 und der in Strömungsrichtung des Betriebsgases 4 gesehen folgenden Brennstoffzelle 14 angeordnet ist, verhindert er, dass Kondenswasser 6, das in der Betriebsgaszuleitung 2 auskondensiert ist, in die Brennstoffzellen 14 gelangt.

Der Kondenswasserabscheider 8 ist an eine Betriebsgasableitung 13 angeschlossen, durch die das Betriebsgas 4 nach Austritt aus den Brennstoffzellen 14 den Brennstoffzellenblock 1 verlässt. Das Kondenswasser 6 wird daher der Betriebsgasableitung 13 zugeleitet und verbindet sich mit dem Produktwasser, das durch die elektrochemische Reaktion der Betriebsgase 4 in den Brennstoffzellen 14 gebildet wurde. Zum Transport des Kondenswassers 6 durch den Kondenswasserabscheider 8 wird die ohnehin vorhandene Druckdifferenz zwischen der Betriebsgaszuleitung 2 und der Betriebsgasableitung 13 genutzt. Der Transport wird durch das durch den Kondenswasserabscheider 8 strömende Betriebsgas 4 unterstützt.

Die Betriebsgaszuleitung 2 ist im Bereich des Brennstoffzellenblocks 1 als ein Axialkanal ausgestaltete, der parallel zur Stapelrichtung der Brennstoffzellen 14, also parallel zur Achse des Brennstoffzellenblocks 1 verläuft. Die Betriebsgaszuleitung 2 ist dort durch Öffnungen in den plattenförmigen Bauelementen des Brennstoffzellenblocks 1 gebildet.

In der Betriebsgaszuleitung 2 befindet sich eine Kondenswasserbarriere 15. Sie verhindert, dass das Kondenswasser 6 vom Strom des Betriebsgases 4 über die Öffnung 7 hinübergeblasen wird und somit in die nachfolgenden Brennstoffzellen 14 gelangen kann. Die Kondenswasserbarriere 15 ist als eine Schwelle ausgestaltet, die das Kondenswasser 6 in der Betriebsgaszuleitung 2 staut.

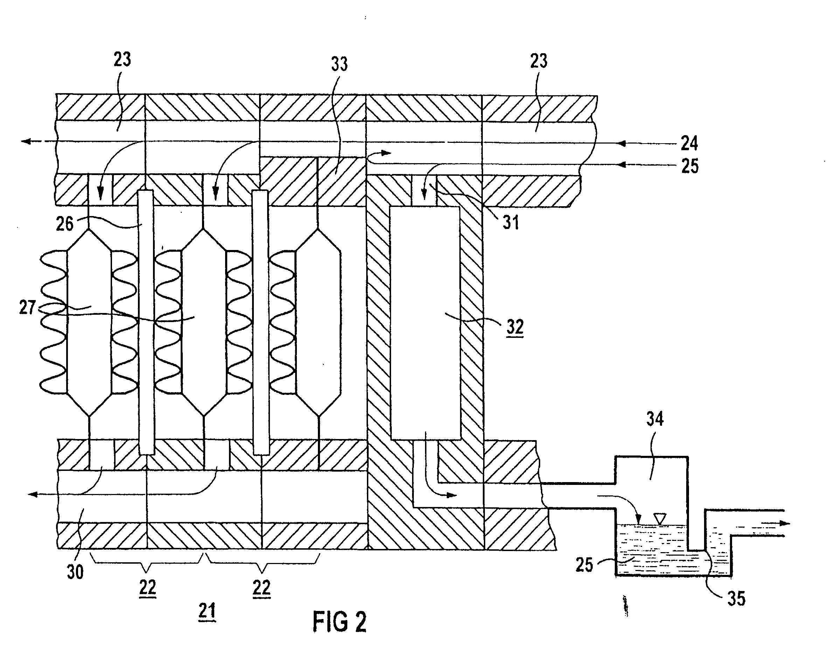

In Figur 2 ist in einer schematischen Schnittdarstellung ein Brennstoffzellenblock 21 dargestellt, der eine Anzahl von Brennstoffzellen 22 in einem Brennstoffzellenstapel sowie eine Betriebsgaszuleitung 23 umfasst. Der Brennstoffzellenblock ist zum Betrieb mit Luft ausgelegt, die in einem in Figur 2 nicht dargestellten Flüssigkeitsringverdichter bis zur Sättigung mit Wasser angereichert wird. Teile des Wassers kondensieren in der Betriebsgaszuleitung 23 aus und gelangen als Kondenswasser 25 in den Brennstoffzellenblock 21.

Die Luft 24 strömt vom Flüssigkeitsringverdichter durch die Betriebsgaszuleitung 23 in die einzelnen Brennstoffzellen 22, die jeweils eine Elektrolyt-Elektroden-Einheit 26 mit beidseitig angrenzenden Thermokarten 27 umfassen. Die Thermokarten 27 werden zum Kühlen oder zum Heizen der Brennstoffzellen 22 verwendet. Nach Durchströmen der Brennstoffzellen 22 strömt die Luft durch eine Betriebsgasableitung 30 aus dem Brennstoffzellenblock 21 heraus.

Das mit der Luft 24 in den Brennstoffzellenblock 21 hineingedrückte Kondenswasser 25 strömt durch die Betriebsgaszuleitung 23 und wird größtenteils durch die Kondenswasserableitung 31 aufgenommen. Ein Teil des Kondenswassers 25 jedoch fließt an der Öffnung vorbei oder über sie hinweg weiter in Richtung Brennstoffzellen 22. Das Kondenswasser 25 wird jedoch durch eine Kondenswasserbarriere 33 von den Brennstoffzellen 22 zurückgehalten. Die Kondenswasserbarriere 33 ist als eine Verengung der Betriebsgaszuleitung 23 ausgestaltet, die wie eine Schwelle das Kondenswasser 25 zurückhält. Das Kondenswasser 25 strömt in den Kondenswasserabscheider 32, der in einer Trennplatte des Brennstoffzellenblocks 21 angeordnet ist, und von dort weiter in einen an den Kondenswasserabscheider 32 angeschlossenen Wassersammelbehälter 34. Der Wassersammelbehälter 34 weist eine Gassperre 35 in Form eines Knicks auf, die das Durchströmen des Kondenswasserabscheiders 32 mit parasitären Betriebsgas verhindert.

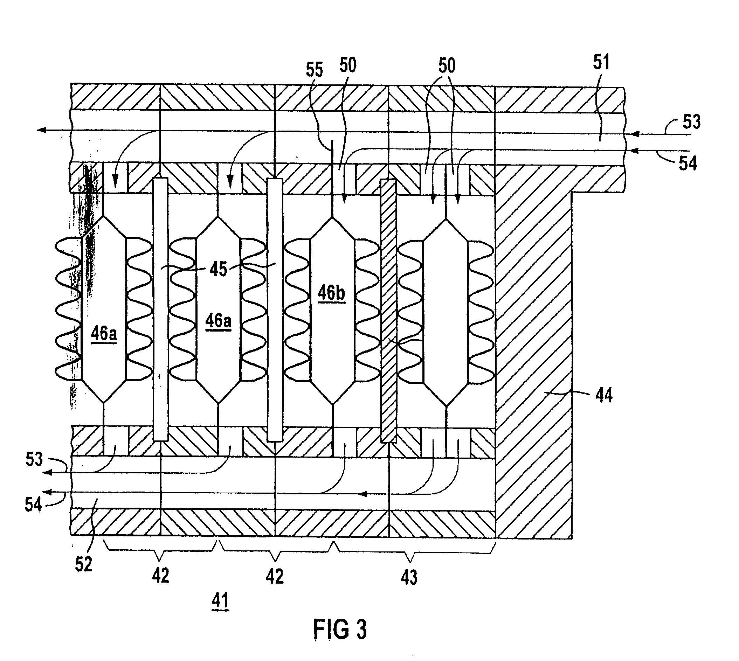

Der in Figur 3 in einer schematischen Schnittzeichnung dargestellte Brennstoffzellenblock 41 umfasst einen Stapel von Brennstoffzellen 42, von denen lediglich zwei gezeigt sind, einen Kondenswasserabscheider 43, der zwischen dem Brennstoffzellenstapel und einer Anschlussplatte 44 angeordnet ist. Die Brennstoffzellen 42 umfassen jeweils eine Elektrolyt-Elektroden-Einheit 45, deren Elektrolyt eine Polymer-Elektrolyt-Membran ist. Die Brennstoffzellen 42 sind PEM-Brennstoffzollen. Außerdem umfassen die Brennstoffzellen 42 beidseitig der Elektrolyt-Elektroden-Einheit jeweils eine Thermokarte 46a, 46b. Die Thermokarten 46a sind als Kühlkarten ausgestaltet, die Thermokarten 46b als Kühl- und/oder Heizkarten, die sowohl zum Kühlen wie auch zum Heizen ausgelegt sind. Der Kondenswasserabscheider 43 umfasst ein Stützelement 47 mit beidseitig angeordneten Thermokarten 46b. Der Kondenswasserabscheider 43 verläuft somit entlang zweier Thermokarten. Er ist durch die Kondenswasserableitung 50 an die Betriebsgaszuleitung 51 angeschlossen. Außerdem ist der Kondenswasserabscheider 43 an eine Betriebsgasableitung 52 angeschlossen.

Während des Betriebs des Brennstoffzellenblocks 41 strömt mit Wasser befeuchtetes Betriebsgas 53 in Form von Wasserstoff (H₂), Sauerstoff (O₂) oder Luft durch die Betriebsgaszuleitung 51 in den Brennstoffzellenblock 41. Das Betriebsgas 53 führt Kondenswasser 54 mit sich, das ebenfalls durch die Betriebsgaszuleitung 51 in den Brennstoffzellenblock 41 gelangt. Das Kondenswasser 54 wird durch die Kondenswasserableitung 50 des Kondenswasserabscheiders 43 aufgenommen, strömt entlang der Thermokarten 46b durch den Kondenswasserabscheider 43 und wird im weiteren Verlauf seiner Strömung in die Betriebsgasableitung 52 geführt. Eine der Thermokarten 46b weist ein verlängertes Blech 55 auf, das verhindert, dass das Kondenswasser 54 über die Kondenswasserableitung 50 hinweg strömt und in die Brennstoffzellen 42 gelangt. Das Blech 55 ragt - ähnlich einer Staumauer - in die als Axialkanal ausgestaltete Betriebsgaszuleitung 51 hinein und sperrt somit den in Strömungsrichtung gesehen hinteren Teil des Brennstoffzellenblocks 41 gegen das Kondenswasser 54 ab. Hierdurch ist gewährleistet, dass die Funktion der Brennstoffzellen 42 nicht durch Kondenswasser beeinträchtigt wird.

## Patentansprüche

1. Brennstoffzellenblock (1,21,41), der eine Anzahl von Brennstoffzellen (14,22/42) in einem Brennstoffzellenstapel sowie eine Betriebsgaszuleitung (2,23,51) umfasst, wobei an die Betriebsgaszuleitung (2,23,51) ein Kondenswasserabscheider (8,32,43) angeschlossen ist, **dadurch gekennzeichnet, dass** der Kondenswasserabscheider (8,32,43) in einem plattenförmigen Bauelement angeordnet ist und das Bauelement in den Brennstoffzellenstapel integriert ist.

2. Brennstoffzellenblock (1) nach Anspruch 1, **dadurch gekennzeichnet, dass** das Bauelement eine Anschlussplatte ist.

3. Brennstoffzellenblock (41) nach Anspruch 1 oder 2, **dadurch gekennzeichnet, dass** der Kondenswasserabscheider (43) entlang einer Thermokarte (46b) verläuft.

4. Brennstoff zellenblock (1,21,41) nach einem der Ansprüche 1 bis 3, **dadurch gekennzeichnet, dass** der Kondenswasserabscheider (8,32,43) in Strömungsrichtung des Betriebsgases (4,24,53) gesehen vor der ersten Brennstoffzelle (14,22,42) an die Betriebsgaszuleitung (2,23,51) angeschlossen ist.

5. Brennstoffzellenblock (1) nach einem der Ansprüche 1 bis 4, **dadurch gekennzeichnet, dass** der Kondenswasserabscheider (8) eine Gassperre (12) umfasst.

6. Brennstoffzellenblock (21) nach einem der Ansprüche 1 bis 5, **dadurch gekennzeichnet, dass** der Kondenswasserabscheider (32) an einen Wassersammelbehälter (34) angeschlossen ist.

7. Brennstoffzellenblock (1,41) nach einem der Ansprüche 1 bis 5, **dadurch gekennzeichnet, dass** der Kondenswasserabscheider (8,43) an eine Betriebsgasableitung (30,52) angeschlossen ist.

8. Brennstoffzellenblock (1,21,41) nach einem der Ansprüche 1 bis 7, **gekennzeichnet durch** eine Kondenswasserbarriere (14,33,55) in der Betriebsgaszuleitung (2,23,51).

9. Brennstoffzellenblock (41) nach Anspruch 8, **dadurch gekennzeichnet, dass** die Kondenswasserbarriere (55) durch ein Blech einer Thermokarte (46b) gebildet ist.

10. Brennstoffzellenblock (1,41) nach Anspruch 8 oder 9, **dadurch gekennzeichnet, dass** die Kondenswasserbarriere (14,55) zwischen dem Anschluss des Kondenswasserabscheiders (8,43) und der in Strömungsrichtung des Betriebsgases (4,53) gesehen folgenden Brennstoffzelle (14,42) angeordnet ist.

11. Brennstoffzellenblock (41) nach einem der Ansprüche 1 bis 10, **dadurch gekennzeichnet, dass** die Brennstoffzellen PEM-Brennstoffzellen sind.

## Claims

1. Fuel cell block (1, 21, 41) which comprises a number of fuel cells (14, 22, 42) in a fuel cell stack and an operating gas feed line (2, 23, 51), a condensation separator (8, 32, 43) being connected to the operating gas feed line (2, 23, 51), **characterized in that** the condensation separator (8, 32, 43) is arranged in a plate-like component and the component is integrated in the fuel cell stack.

2. Fuel cell block (1) according to Claim 1, **characterized in that** the component is a connection plate.

3. Fuel cell block (41) according to Claim 1 or 2, **characterized in that** the condensation separator (43) runs along a thermal component (46b).

4. Fuel cell block (1, 21, 41) according to one of Claims 1 to 3, **characterized in that** the condensation separator (8, 32, 43) is connected to the operating gas feed line (2, 23, 51) upstream of the first fuel cell (14, 22, 42), as seen in the direction of flow of the operating gas (4, 24, 53).

5. Fuel cell block (1) according to one of Claims 1 to 4, **characterized in that** the condensation separator (8) comprises a gas block (12).

6. Fuel cell block (21) according to one of Claims 1 to 5, **characterized in that** the condensation separator (32) is connected to a water collection vessel (34).

7. Fuel cell block (1, 41) according to one of Claims 1 to 5, **characterized in that** the condensation separator (8, 43) is connected to an operating gas discharge line (30, 52).

8. Fuel cell block (1, 21, 41) according to one of Claims 1 to 7, **characterized by** a condensation barrier (14, 33, 55) in the operating gas feed line (2, 23, 51).

9. Fuel cell block (41) according to Claim 8, **characterized in that** the condensation barrier (55) is formed by a metal sheet of a thermal component (46b).

10. Fuel cell block (1, 41) according to Claim 8 or 9, **characterized in that** the condensation barrier (14, 55) is arranged between the connection of the condensation separator (8, 43) and the following fuel cell (14, 42), as seen in the direction of flow of the operating gas (4, 53).

11. Fuel cell block (41) according to one of Claims 1 to 10, **characterized in that** the fuel cells are PEM fuel cells.

## Revendications

1. Assemblage (1, 21, 41) de piles à combustible qui comprend un certain nombre de piles (14, 22, 42) à combustible dans un empilement de piles à combustible, ainsi qu'un conduit (2, 23, 51) d'alimentation en gaz de fonctionnement, un séparateur (8, 32, 43) d'eau de condensation étant branché sur le conduit (2, 23, 51) d'alimentation en gaz de fonctionnement, **caractérisé en ce que** le séparateur (8, 32, 43) d'eau de condensation est monté dans un élément en forme de plaque et l'élément est intégré à l'empilement de piles à combustible.

2. Assemblage (1) de piles à combustible suivant la revendication 1, **caractérisé en ce que** l'élément est une plaque de connexion.

3. Assemblage (41) de piles à combustible suivant la revendication 1 ou 2, **caractérisé en ce que** le séparateur (43) d'eau de condensation s'étend le long du carte (43b) thermique.

4. Assemblage (1, 21, 41) de piles à combustible suivant l'une des revendications 1 à 3, **caractérisé en ce que** le séparateur (8, 32, 43) d'eau de condensation est branché tel que considéré dans le sens du courant du gaz (4, 24, 53) de fonctionnement en amont de la première pile (14, 22, 42) à combustible sur le conduit (2, 23, 51) d'alimentation en gaz de fonctionnement.

5. Assemblage (1) de piles à combustible suivant l'une des revendications 1 à 4, **caractérisé en ce que** le séparateur (8) d'eau de condensation comprend un dispositif (12) d'arrêt du gaz.

6. Assemblage (21) de piles à combustible suivant l'une des revendications 1 à 5, **caractérisé en ce que** le séparateur (32) d'eau de condensation est branché sur une cuve (34) collectrice d'eau.

7. Assemblage (1, 41) de piles à combustible suivant l'une des revendications 1 à 5, **caractérisé en ce que** le séparateur (8, 43) d'eau de condensation est branché sur un conduit (30, 52) d'évacuation du gaz de fonctionnement.

8. Assemblage (1, 21, 41) de piles à combustible suivant l'une des revendications 1 à 7, **caractérisé par** une barrière (14, 33, 55) pour l'eau de condensation dans le conduit (2, 23, 51) d'alimentation en gaz de fonctionnement.

9. Assemblage (41) de piles à combustible suivant la revendication 8, **caractérisé en ce que** la barrière (55) pour l'eau de condensation est formée par une tôle d'une carte (46b) thermique.

10. Assemblage (1, 41) de piles à combustible suivant la revendication 8 ou 9, **caractérisé en ce que** la barrière (14, 55) pour l'eau de condensation est disposée entre le branchement du séparateur (8, 43) d'eau de condensation et la pile (14, 42) à combustible suivante telle que considérée dans le sens du courant du gaz (4, 53) de fonctionnement.

11. Assemblage (41) de piles à combustible suivant l'une des revendications 1 à 10, **caractérisé en ce que** les piles à combustible sont des piles à combustible PEM.
